# EUROPÄISCHE PATENTSCHRIFT

(11) **EP 3 528 998 B1**
(45) Veröffentlichungstag und Bekanntmachung des Hinweises auf die Patenterteilung: **15.03.2023**
(21) Anmeldenummer: 17793592.1
(22) Anmeldetag: 17.10.2017
(51) Int. Cl.: B23Q 1/70, B23Q 5/04

(54) **MOTORSPINDEL**
MOTOR SPINDLE
ÉLECTROBROCHE

(30) Priorität: 18.10.2016 DE 102016119821
(43) Veröffentlichungstag der Anmeldung: 28.08.2019
(73) Patentinhaber: Franz Kessler GmbH, 88422 Bad Buchau (DE)
(72) Erfinder: VAN SPRANG, Joachim, 88213 Ravensburg (DE); TÜLLMANN, Udo, 99817 Eisenach (DE); FETSCH, Eugen, 88400 Biberach (DE)
(74) Vertreter: Otten, Roth, Dobler & Partner mbB Patentanwälte
(86) Internationale Anmeldenummer: PCT/EP2017/076423
(87) Internationale Veröffentlichungsnummer: WO 2018/073213

(56) Entgegenhaltungen:
- DE-B3-102005 021 202
- JP-A- H10 286 735

## Beschreibung

Die Erfindung betrifft eine Motorspindel nach dem Oberbegriff des Anspruchs 1.

### Stand der Technik

In Werkzeugmaschinen, insbesondere bei Fräsmaschinen, CNC-Bearbeitungszentren mit mehrachsiger Bearbeitung oder dergleichen, werden sehr häufig Motorspindeln mit Werkzeugspanner eingesetzt, welche einen automatischen Werkzeugwechsel ermöglichen. Dies bedeutet, das Werkzeug ist so mit der Welle der Werkzeugmaschinenspindel verbunden, dass es automatisch gelöst werden kann. Zum Spannen verwendet man in der überwiegenden Anzahl der Fälle Werkzeugspanner, welche meist mit einem Federpaket etc. verbunden sind. Die daraus resultierende Spannkraft wird über die Zugstange auf Spannzangensegmente übertragen, welche wiederum das Werkzeug mit der Welle verbinden.

Zum Lösen wird die Zugstange und damit auch das Teller-FederPaket mit einer axial wirkenden Lösekraft beaufschlagt, welche die Federn zusammen drückt und somit eine axiale Verschiebung der Zugstange ermöglicht, was wiederum zu einer Lösebewegung der Spannsegmente im Bereich der Werkzeugaufnahme führt.

Die Bearbeitungswerkzeuge weisen hierbei einen standardisierten Schaft, insb. SK oder HSK, auf, der in einer Werkzeugaufnahme gehaltert/verspannt wird.

Gerade bei modernen Werkzeugmaschinen sind mehrachsige Bearbeitungen möglich. Gemäß der DE 198 50 708 C2 wird eine Motorspindel hierfür beweglich/schwenkbar gelagert, so dass eine mehrachsige Bearbeitung eines Werkstückes realisiert werden kann.

Auch sind bereits sog. Winkelköpfe in Einsatz, wobei ein Bohrer, Fräser oder dergleichen winklig, insb. rechtwinklig, zur Drehachse der Motorspindel ausgerichtet ist. Hierbei wird das rotierende Werkzeug bzw. der Bohrer/Fräser von der Motorspindel bzw. der Rotorwelle angetrieben, wobei der Winkelkopf wiederum einen standardisierten Schaft, insb. SK oder HSK, aufweist. Das Werkzeug rotiert jedoch nicht (fluchtend) um die Drehachse, sondern winklig, insb. rechtwinklig hierzu. Um ein Rotieren des gesamten Winkelkopfes um die Drehachse zu verhindern, weisen diese neben dem Schaft bzw. HSK/SK einen Halter bzw. eine sog. Drehmomentenstütze auf, die am Stator der Motorspindel anschlägt bzw. gehalten, quasi "verankert" ist.

Neben starren bzw. passiven Winkelköpfen sind darüber hinaus bereits "aktive" Winkelköpfe bekannt, die ein Verdrehsystem aufweisen. Hiermit kann der Winkelkopf die Ausrichtung des Werkzeuges, z.B. des Bohrers, verstellen bzw. um die Drehachse der Motorspindel verdrehen. Hiermit können z.B. unterschiedlichste, jeweils senkrecht zur Oberfläche ausgerichtete Bohrungen an einem gebogenen Profil wie einem Flugzeugtragflächenprofil, einer Kugel oder dergleichen eingebracht werden, ohne dass der Winkelkopf bzw. das Bearbeitungswerkzeug ausgetauscht werden muss. Gemäß der DE 10 2006 046 502 A1 wird die Verdrehung des Werkzeuges des Winkelkopfs mittels der Rotorwelle und einem aufwendigen Kupplungssystem bzw. mechanischen Umschaltsystem generiert. Aus der DE 10 2006 030 159 A1 ist ein Winkelkopf bekannt, der ein eigenes Antriebssystem aufweist, um die Ausrichtung des Werkzeuges zu verstellen/verdrehen. Nachteilig bei derartigen drehbaren Winkelköpfen ist jedoch, dass zusätzlich eine Energieversorgung bzw. Mechaniken vorzusehen sind.

Die JP H10 286735 A offenbart eine Motorspindel, auf der der Oberbegriff des Anspruchs 1 basiert.

So sind neben passiven bzw. starren Winkelköpfen für o.g. spezielle Anwendungsfälle bzw. Bearbeitungen zusätzlich diese drehbaren Winkelköpfen vorzuhalten und bei Bedarf an der Motorspindel zu montieren, was zusätzliche Rüstzeit bzw. Werkzeugwechsel bedeutet. Entsprechend entsteht für den Betreiber einer Werkzeugmaschine ein hoher technischer und finanzieller Aufwand.

### Aufgaben und Vorteile der Erfindung

Aufgabe der Erfindung ist es demgegenüber, eine Motorspindel vorzuschlagen, die flexibler einsetzbar ist und/oder den konstruktiven oder betriebswirtschaftlichen Aufwand verringert.

Diese Aufgabe wird, ausgehend von einer Motorspindel der eingangs genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Motorspindel durch die Merkmale des kennzeichnenden Teil des Anspruchs 1 aus.

Mit Hilfe einer derartigen Motorspindel können gegenüber bisherigen Motorspindeln neue, zusätzliche Funktionalitäten verwirklicht werden. So kann z.B. der Rotor unabhängig bzw. separat von der Rotoreinheit bzw. der Rotorwelle der Motorspindel verstellt bzw. gedreht, d.h. angetrieben werden. Das heißt, dass der Rotor des Motors sich relativ zur Rotoreinheit bzw. Rotorwelle verstellen/verdrehen kann, ggf. gleichzeitig angetrieben und/oder in jeweils separaten bzw. unabhängigen Betriebsphasen und insb. zur Verwirklichung unterschiedlichster Funktionalitäten.

Demzufolge kann nicht nur wie beim Stand der Technik nur das Werkzeug angetrieben werden, sondern ein zweites Bearbeitungselement und/oder eine zweite Funktionalität kann ggf. zeitgleich zur Bearbeitung mit dem Werkzeug realisiert werden.

Mit Hilfe eines derartigen, in der Motorspindel integrierten zusätzlichen Elektromotors kann eine besonders platzsparende Motorspindel gemäß der Erfindung realisiert werden. So kann bei dem oftmals in Werkzeugmaschinen sehr grenzten Platzangebot bzw. Bauraum die erfindungsgemäße platzsparende Baueinheit in vorteilhafter Weise angeordnet und z.B. auch für/in kleineren Hohlräumen bzw. Ausnehmungen der Werkstücke eingesetzt werden.

Eine erfindungsgemäße, platzsparende Motorspindel kann in vorteilhafter Weise mit einem "passiven" bzw. starren Winkelkopf eine gewöhnliche Motorspindel mit einem vergleichsweise großvolumigen, "aktiv" verdrehbaren Winkelkopf ersetzen. Demzufolge können vergleichsweise kleine Ausnehmungen eines Werkstückes gemäß der Erfindung bearbeitet werden. D.h., dass z.B. Bohrungen oder dergleichen mit unterschiedlichster Ausrichtung/Orientierung mit einem einzigen, starren Bearbeitungswerkzeug bzw. Winkelkopf realisiert werden können. So entfallen die Rüstzeiten zum Wechseln von Bearbeitungswerkzeugen. Zudem ist ein "passiver" bzw. starrer Winkelkopf oder dergleichen kleinvolumiger bzw. dünner/schlanker ausbildbar, so dass mit der erfindungsgemäßen hochintegrierten Motorspindel in Kombination mit einem derartigen Bearbeitungswerkzeug bzw. Winkelkopf in kleinere Hohlräume bzw. Ausnehmungen, Hinterschneidungen oder dergleichen "eingetaucht" werden kann, was die Flexibilität der Motorspindel zudem erhöht bzw. weitere oder neuartige Anwendungsmöglichkeiten erschließt.

Demzufolge kann gemäß der Erfindung ein Bearbeitungswerkzeug bzw. Winkelkopf eingesetzt werden, wobei auf eine separate elektrische, hydraulische oder mechanische Energieversorgung verzichtet werden kann. Dies ermöglicht eine wirtschaftlich besonders vorteilhafte Betriebsweise einer erfindungsgemäßen Werkzeugmaschine bzw. Motorspindel/Werkzeugmaschinenspindel.

Folglich können bislang übliche bzw. standardisierte Werkzeugkomponenten entsprechender Werkzeugmaschinenspindel/Motorspindeln weiterhin verwendet werden, z.B. mit Werkzeuge, insb. Winkelköpfe, mit HSK oder SK etc., ohne dass diese verändert oder an die Motorspindel gemäß der Erfindung anzupassen wären. Entsprechend wirtschaftlich günstig sind die einzusetzenden Werkzeuge bzw. Winkelköpfe.

Gemäß der Erfindung ist das drehbare Gehäuseelement und/oder die drehbare Stirnfläche des Endabschnitts als Werkzeughalter zum Halten des Bearbeitungswerkzeugs ausgebildet. So kann ein standardisiertes Bearbeitungswerkzeug wie ein Winkelkopf verwendet werden, der bereits eine sog. Drehmomentenstütze bzw. Ankerelement umfasst, die/das mit dem Werkzeughalter bzw. dem Gehäuseelement und/oder der Stirnfläche in Wirkverbindung steht. Zudem wird während der Bearbeitung/Spannbearbeitung bzw. Rotation der Rotoreinheit eine feste Positionierung des Bearbeitungswerkzeugs bzw. Winkelkopfs gewährleistet.

Erfindungsgemäß weist das Gehäuseelement und/oder die drehbare Stirnfläche eine Ausnehmung und/oder Anschlagfläche für das Bearbeitungswerkzeug bzw. den Winkelkopf auf. Hiermit kann in vorteilhafter Weise (bei rotierender Rotoreinheit) ein Mitdrehen des Bearbeitungswerkzeugs bzw. Winkelkopfs oder dergleichen verhindert werden. Demzufolge bleibt auch bei rotierender Rotoreinheit die Ausrichtung des Bearbeitungswerkzeugs bzw. Winkelkopfs bzw. des Werkzeugelementes wie eines Bohrers, Fräsers etc. während der Bearbeitung/Spannbearbeitung unverändert.

In Kombination hierzu ist das Gehäuseelement und/oder die drehbare Ausnehmung und/oder Anschlagfläche für das Bearbeitungswerkzeug bzw. den Winkelkopf nicht (nur) an der Stirnfläche, sondern am in radialer Richtung ausgerichteten/exponierten Umfang bzw. Umfangsfläche des Endabschnittes angeordnet. Das bedeutet, dass das Gehäuseelement sich auch oder nur umfangseitig erstreckt und/oder in vorteilhafter Weise eine Umfangfläche und/oder Ausnehmung oder dergleichen aufweist, das/die als Werkzeughalter zum Halten des Bearbeitungswerkzeugs ausgebildet ist.

Vorteilhafterweise ist wenigstens ein Positionssensor zum Erfassen der Drehwinkelposition des Rotors und/oder des Gehäuseelementes vorgesehen. Hiermit kann u.a. mit Hilfe einer elektronischen/elektrischen Kontrolleinheit eine gewünschte bzw. benötigte Ausrichtung des Bearbeitungswerkzeugs bzw. Winkelkopfs bzw. des Werkzeugelementes wie eines Bohrers, Fräsers etc. während der Bearbeitung/Spannbearbeitung erfasst und/oder eingestellt bzw. nachjustiert werden.

Erfindungsgemäß ist das zweite elektromagnetische Antriebssystem in Richtung der Drehachse wenigstens teilweise zwischen der Stirnfläche des Endabschnitts und einem Anschlussflansch zum Fixieren der Statoreinheit an einem Spindelkasten angeordnet. So kann einerseits die Motorspindel in einem Spindelkasten bzw. einem Maschinengehäuse, einer Aufnahme der Werkzeugmaschine oder dergleichen fest fixiert, insb. angeschraubt werden. Andererseits kann das zweite elektromagnetische Antriebssystem des Motors, insb. zum Verdrehen des Bearbeitungswerkzeugs bzw. Winkelkopfs bzw. des Werkzeugelementes wie eines Bohrers, Fräsers etc. um die Drehasche, vorteilhaft vor/neben dem Spindelkasten montiert und bei Bedarf demontiert bzw. ausgetauscht werden. Dies erhöht die Wirtschaftlichkeit der erfindungsgemäßen Motorspindel.

Bevorzugt ist der Anschlussflansch als Motoranschlussflansch ausgebildet. Das bedeutet, dass am Anschlussflansch auf der einen Seite das erste elektromagnetische Antriebssystem und auf der anderen bzw. gegenüberliegenden Seite das zweite elektromagnetische Antriebssystem in vorteilhafter Weise angeordnet bzw. fixiert/angeschraubt sind. So kann einerseits die Motorspindel fest in der Werkzeugmaschine fixiert und andererseits kann der Motor, insb. der Stator und/oder der Rotor bzw. Teile hiervon ohne großen Aufwand demontiert und wieder montiert bzw. ausgetauscht werden. Hiermit können z.B. wartungsintensivere Komponenten des Motors ohne großen Aufwand bei Bedarf ausgetauscht werden. Dies erhöht die Wirtschaftlichkeit der erfindungsgemäßen Motorspindel, insb. bei Beeinträchtigungen der Lagerung des Rotors oder Positionssensors etc..

Gemäß der Erfindung ist das erste elektromagnetische Antriebssystem wenigstens teilweise zwischen der Lagereinheit und zumindest einer Lagervorrichtung zum drehbaren Lagern der Rotoreinheit in der Statoreinheit angeordnet. So weist der dem Werkzeug zugewandten bzw. vorderen Endbereich der Motorspindel vorzugsweise ein erstes Wälzlager, insb. Festlager bzw. Wälzlagereinheit in X- oder O-Anordnung, und ein zweiter, dem Werkzeug abgewandten bzw. hinteren Endbereich ein zweites Wälzlager, insb. Loslager auf, zwischen denen im Wesentlichen das erste elektromagnetische Antriebssystem angeordnet ist. So weist eine erfindungsgemäße Motorspindel eine in Richtung der Drehachse ausgerichtete Länge auf, die größer als, insb. doppelt so groß wie ein Durchmesser des Statorgehäuses ist.

Der große Vorteil der Fest-Loslager-Kombination bei derartigen Motorspindeln ist der, dass das Festlager, das nahe an der Werkzeugaufnahme sitzt, axiale Bewegungen der Spindelwelle im vorderen Bereich auf ein Minimum reduziert. Dies führt wiederum dazu, dass das Werkzeug nur sehr geringen axialen Verlagerungen ausgesetzt ist. Dies ist vor allem im modernen Werkzeugmaschinenbau bzw. bei modernen Hochleistungsmotorspindeln oder dergleichen von enormen Vorteil, da heutzutage sehr hohe Genauigkeitsanforderungen an entsprechende Werkzeugmaschinen wie CNC-Maschinen oder dergleichen gestellt werden. Hier müssen nicht nur hundertstel Millimeter, sondern durchaus auch tausendstel Millimeter Genauigkeit eingehalten werden.

Generell ist denkbar, das auch bereits vorhandene bzw. hergestellte und sogar seit langem im Betrieb eingesetzte Werkzeugmaschinenspindeln/Motorspindeln gemäß der Erfindung um-/nachgerüstet werden können. Das bedeutet, dass beispielsweise der sog. Spindelkopf einer bisherigen Motorspindel durch einen Motor gemäß der Erfindung ersetzt wird.

Eine Statoreinheit weist in vorteilhafter Weise eine Kühleinheit und/oder eine Drehdurchführung bzw. eine Mediendurchführung für Kühl- und/oder Schmiermittel oder dergleichen auf, so dass z.B. stirnseitig von einem Ende der Löseeinheit entsprechendes Medium bzw. Kühl- und Schmiermittel oder dergleichen durch die Löseeinheit und durch die Rotoreinheit gemäß der Erfindung hindurch zum Werkzeugspanner bzw. bis hin zum Werkzeug/Werkstück durchleitbar ist.

Vorzugsweise weist der Motor bzw. Stator eine Kühlvorrichtung auf. In vorteilhafter Weise umfasst die Kühlvorrichtung das gleiche Kühlmedium, insb. Kühlflüssigkeit, wie die Kühleinheit der Statoreinheit. Vorteilhafterweise sind Verbindungsleitungen/-kanäle zwischen Kühleinheit und Kühlvorrichtung vorhanden. Hiermit reduziert sich der Aufwand zur Kühlung der erfindungsgemäßen Motoreinheit, da insb. lediglich zwei äußere Anschlüsse für das Kühlmedium/-system bzw. einen geschlossenen Kühlkreislauf notwendig sind.

Vorteilhafterweise umfasst der Rotor des Motors wenigstens einen Permanentmagneten des zweiten Antriebssystems. Das bedeutet, dass die Permanentmagnete gemäß der Erfindung auf/an der Außenseite/-fläche des Rotors angeordnet sind bzw. wenigstens teilweise die nach außen gerichtete/weisende Oberfläche des Rotors bilden. Gegebenenfalls sind Fixierkomponenten zur sicheren Fixierung der Permanentmagnete vorgesehen. Dies können beispielsweise Bandagen und/oder eine Klebeschicht bzw. ein Kleber oder dergleichen sein.

Generell kann die Motorspindel und/oder der Motor gemäß der Erfindung in vorteilhafter Weise als Synchron- oder als Asynchron-Maschine ausgebildet werden.

Vorzugsweise ist wenigstens ein Lager des Motors als Kreuzrollenlager ausgebildet. Hiermit wird erreicht, dass mit einem einzigen Wälzlager eine Aufnahme von relativ großen axialen und radialen Kräften realisierbar ist. Das bedeutet, dass hiermit ein Axial-/Radiallager mit nur einem einzigen Wälzlager realisierbar ist, so dass besonders wenig Bauraum benötigt wird für diese Lagerung.

In einer vorteilhaften Variante der Erfindung ist wenigstens Sensor zur Erfassung einer Position des Gehäuseelementes und/oder des Rotors vorgesehen. Beispielsweise ist wenigstens ein Sensor bzw. Näherungssensor vorgesehen, insb. induktiv oder kapazitiv oder optisch oder magnetisch oder Ultraschall-/ Radar-Sensor.

Vorzugsweise ist der Sensor als ein Drehgeber (inkremental und/oder absolut) zur Drehwinkelerfassung ausgebildet. So kann/können in vorteilhafter Weise die Umdrehungen bzw. der Verstellweg/Verstellwinkel bzw. die Position des Gehäuseelementes und/oder des Rotors in Umfangsrichtung ermittelt werden.

Generell kann ein sog. Winkelkopf mit standardisiertem Schaft bzw. SK, HSK etc. mit bislang bereits handelsüblichen Werkzeugspannern kombiniert werden bzw. zusammenarbeiten.

Hierbei sind vielfach Tellerfedern zum Spannen des Werkzeugs in Betriebsposition vorhanden.

In einer vorteilhaften Variante der Erfindung ist eine Sensoreinheit zur Erfassung eines elektrischen Motorparameters vorgesehen. Beispielsweise ist eine Auswertung der Leistung/Leistungsaufnahme und/oder des Betriebsstroms bzw. Betriebsspannung des zweiten elektrischen Antriebssystems vorgesehen. So kann in vorteilhafter Weise u.a. ein Leerlauf und/oder eine Beeinträchtigung erfasst werden. Vorzugsweise wird ein Ist-Soll-Vergleich vorgesehen, wobei z.B. ein geringer Leerlaufstrom bzw. Leerlaufleistung und/oder ein elektrischer Strom mit einer (gespeicherten) Soll-Leistung oder dergleichen verglichen wird, um ein ordnungsgemäßes Arbeiten bzw. Einspannen/Fixieren des Werkzeuges und/oder die Stellung bzw. Funktion des Winkelkopfes zu erfassen/ermitteln. Beispielsweise wird das Bearbeitungswerkzeug bzw. der Winkelkopf während der Bearbeitung mittels eines Fixier-/ Haltestromes fixiert, was/der entspr. erfassbar ist.

Darüber hinaus sind in den letzten Jahren zunehmende Anforderungen an die Zerspannung und insbesondere an Parametern wie Vorschub, Winkelgeschwindigkeit festzustellen. So sind zwischenzeitlich auch Werkzeuge im Einsatz, wobei während der Bearbeitung die tatsächliche Dicke bzw. Maßhaltigkeit mittels entsprechender Sensoren ermittelt und zur Steuerung der Werkzeugmaschine bzw. zur Verstellung des Werkzeugs verwendet wird. Beispielsweise sind Ultraschallsensoren im Einsatz, die auf/an der Rotorwelle bzw. im/am (rotierenden) Werkzeug angeordnet sind.

Vorzugweise wird wenigstens eine elektrische Drehdurchführung bzw. Energieübertragungssystem verwendet, das elektrische Energie bzw. elektrische Signale/Informationen zwischen dem statischen Teil bzw. dem Stator auf den rotierenden Teil bzw. den Rotor überträgt. Hierbei kann die Drehdurchführung bzw. Energieübertragungssystem in axialer und/oder radialer Richtung/Ausrichtung erfolgen. Das heißt, dass die beiden relativ zueinander sich bewegenden/verstellenden/rotierenden Komponenten bzw. Baugruppen axial oder radial ausgerichtet sind.

Dies wird zum Beispiel mit Übertragungsspulen realisiert, die im Wesentlichen aus zwei in Wirkverbindung stehenden Spulen (mit Ferritkernen) bestehen und zwischen denen ein fest eingestellter bzw. definierter Spalt vorhanden ist. Die Maßhaltigkeit des Spaltes ist sehr wichtig, um die Energieübertragung und/oder die Signalübertragung nicht zu beeinträchtigen. Deshalb können diese Übertragungsspulen zwischen dem Rotor und dem Stator und/oder der Rotoreinheit und der Statoreinheit vor allem im vorderen Bereich beim Werkzeug bzw. im Bereich des vorderen Festlagers angeordnet werden.

Allerdings können auch Schleifkontakte oder dergleichen verwendet werden, um als elektrische Drehdurchführung bzw. Energieübertragungssystem ausgebildet zu werden, das elektrische Energie bzw. elektrische Signale/Informationen zwischen dem statischen Teil bzw. dem Stator auf den rotierenden Teil bzw. den Rotor überträgt.

In einer bevorzugten Variante der Erfindung umfasst die Statoreinheit bzw. der Motor, isnb. das drehbare Gehäuseelement den oder die zuvor genannten Sensoren oder dergleichen. Alternativ oder in Kombination hierzu ist jedoch auch eine vorteilhafte Variante der Erfindung realisierbar, wobei das Bearbeitungswerkzeug mit dem Werkezugelement, wie ein Winkelkopf oder dergleichen, wenigstens einen Sensor zur Erfassung eines elektrischen Betriebsparameters umfasst.

Hierbei ist von besonderem Vorteil, wenn/dass die erfindungsgemäße Motorspindel, insb. das drehbare Gehäuseelement, eine elektrische Verbindungseinheit wie ein Stecker oder dergleichen zum elektrischen Verbinden/Übertragen von elektrischer Energie und/oder Signalen zwischen dem Bearbeitungswerkzeug und der erfindungsgemäßen Motorspindel, insb. das drehbare Gehäuseelement, aufweist. Hiermit kann z.B. ein Antrieb und/oder ein Sensor des Bearbeitungswerkzeugs mit elektrischer Energie und/oder Steuersignalen und/oder Betriebs-/Messsignalen versorgt bzw. übertragen werden. Zum Beispiel können hiermit in vorteilhafter Weise Sensorsingale mittels Verbindungseinheit bzw. Stecker oder dergleichen vom Sensor des drehbaren Bearbeitungswerkzeugs auf das drehbare Gehäuseelement und ggf. zudem zu einer vorteilhaften elektrischen/elektronischen Kontroll-/Steuereinheit der Motorspindel und/oder der Werkzeugmaschine übertragen werden. Dies erhöht zusätzlich die Funktionalität bzw. Flexibilität Motorspindel gemäß der Erfindung.

### Ausführungsbeispiel

Ein Ausführungsbeispiel der Erfindung ist in der Zeichnung dargestellt und wir anhand der Figuren nachfolgend näher erläutert.

Im Einzelnen zeigt:
- Figur 1: schematisch eine erste Motorspindel gemäß der Erfindung mit einem montierten Winkelkopf bzw. Bearbeitungswerkzeug,
- Figur 2: schematisch einen vergrößerten, teilweise geschnittenen Ausschnitt durch die erste Motorspindel gemäß Figur 1 und
- Figur 3: schematisch einen vergrößerten, teilweise geschnittenen Ausschnitt durch eine zweite Motorspindel gemäß der Erfindung.

In den Figuren ist jeweils eine Motorspindel 1 mit einer Statoreinheit 2 und einer um eine Drehachse 15 antreibbaren, drehbaren Rotoreinheit 3 mit Rotorwelle 26 dargestellt. Die Statoreinheit 2 umfasst u.a. eine Statorhülse 4 eines Statorgehäuses 8, eine Löseeinheit 5, einen Anschlussflansch 7 sowie einen Motor 6 mit einem drehbaren Gehäuseelement 9 im Sinn der Erfindung.

Zudem umfasst die Motorspindel 1 eine Werkzeugaufnahme 14 mit einer Spannzange 13 eines Spannsystems, ein vorderes Lager 10, das bevorzugt als eine vorgespannte Lagereinheit 10 mit zwei Wälzlagern/Kugellagern ausgebildet ist, und ein nicht näher dargestelltes hinteres Lager 11 sowie ein nicht näher dargestelltes erstes elektrische Antriebssystem 12, das im Wesentlichen zwischen den beiden Lagern 10, 11 angeordnet ist, wie dies der Fachmann kennt. Auch ist ein (Flüssigkeits-) Kühlsystem des erstes elektrische Antriebssystem 12 innerhalb der Statorhülse 4 bzw. der Statoreinheit 2 nicht näher dargestellt, jedoch dem Fachmann bekannt.

Die Werkzeugaufnahme 14 umfasst hierbei eine vordere Stirn- bzw. Endfläche 42, die den vordersten Punkt/Teil der Rotoreinheit 3 bzw. der Motorspindel 1 im Sinn der Erfindung ausbildet. Hieran wird das Werkzeug 30 befestigt.

Der Anschlussflansch 7 ist einerseits mit der Statorhülse 4 verschraub (Verschraubung 17) und andererseits kann dieser mit einem nicht näher dargestellten Spindelkasten der Werkzeugmaschine fest verschraub/fixiert werden. Hierzu weist der Anschlussflansch 7 vorteilhafte Bohrungen 16 für Schrauben auf. Dies ermöglicht eine vorteilhafte Befestigung in der Werkzeugmaschine, die bei Bedarf demontiert werden kann, um die gesamte Motorspindel 1 auszutauschen/warten etc..

Zugleich ist in vorteilhafter Weise ein Stator 18 des Motors 6 fest mittels Schrauben 19 oder dergleichen am Anschlussflansch 7 montiert/fixiert. Der Stator 18 umfasst ein (Flüssigkeits-) Kühlsystem 24 eines zweiten elektrischen Antriebssystems 20. Das zweite elektrische Antriebssystems 20 weist vorzugsweise Antriebsspulen 21 des Stators 18 und Permanentmagnete 22 des Rotors 23 auf.

Weiterhin ist ein vorteilhaftes Motorlager 27, insb. ein Kreuzrollenlager 27, zur Lagerung des um die Drehachse 15 drehbaren Rotors 23 im Stator 18 sowie wenigstens ein Sensor 29 bzw. Drehgeber/Encoder vorgesehen. So ist die Winkelposition bzw. Stellung des Rotors 23 in Bezug zum Stator 18 erfassbar und z.B. mit einer nicht näher dargestellten Steuer-/ Kontrolleinheit mittels der somit vorteilhaft bekannten Position/Winkelstellung des Rotors 23 bzw. drehbaren Gehäuseelementes 9 kann die Stellung bzw. Position eines Bearbeitungswerkzeuges 30 mit einem Werkzeugelement 31 wie eines Bohrers, Fräsers oder dergleichen ermittelt und eingestellt/festgelegt werden.

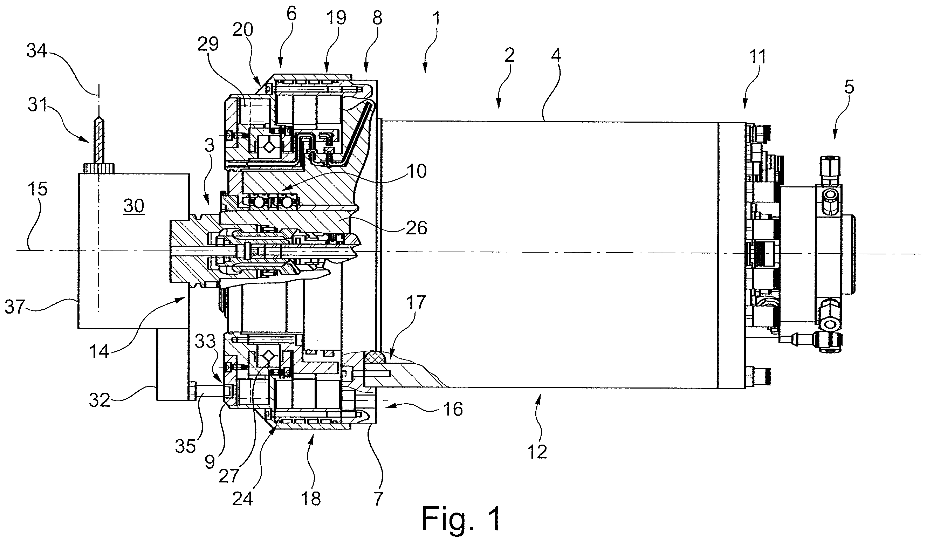

In Figur 1 wird deutlich, dass das Bearbeitungswerkzeuges 30 eine Drehmonentenstütze 32, quasi als "Anker", aufweist, wobei ein Bolzen 35, Stift etc. des Bearbeitungswerkzeuges 30 in einer Ausnehmung 33 einer Stirnseite 41 des drehbaren Gehäuseelementes 9 des Rotors 23 hineinragt bzw. in diesem anschlägt. Folglich wird ein Gehäuse 37 des Bearbeitungswerkzeuges 30 beim Verdrehen des Rotors 23 mitgedreht/verdreht, so dass sich die Ausrichtung des Werkzeugelementes 31 ändert/verdreht. D.h. dass eine Bearbeitungsachse 34 des Werkzeugelementes 31 bzw. des Bearbeitungswerkzeuges 30 um die Drehachse 15 verstellbar/verdrehbar ist. Hiermit können vorteilhafte Anwendungen bzw. Bohrungen/Bearbeitungen von z.B. gebogenen Werkstückoberflächen wie gebogene Tragflächenprofile von Flugzeugflügeln, Kugeln (innen/außen) bearbeitet bzw. gebohrt werden.

So wird deutlich, dass gemäß der Erfindung keine Bearbeitungswerkzeuge 30 mit eigenem, aufwändigem und relativ großvolumigen Antrieb bzw. Antriebssystem für vorgenannte Anwendungen benötigt werden, sondern mit der Motorspindel 1 gemäß der Erfindung reicht ein kleinvolumiges bzw. platzsparendes, kostengünstiges Bearbeitungswerkzeug 30 insb. mit Winkelgetriebe (Achse 15 und Achse 34 sind winklig, insb. mit einem rechten Winkel zueinander ausgerichtet) aus. Dementsprechend können standardisierte, insb. mit Kegelschaft, HSK etc. ausgestattete Bearbeitungswerkzeuge 30 verwendet werden.

Zudem sind weitere, neuartige, vorteilhafte Anwendungen der Erfindung denkbar, wie ein Bohren/Fräsen eines Werkstücks mit einem Werkzeuges wie Fräser, Bohrer mit HSK, das mittels der Rotoreinheit 3 bzw. der Rotorwelle 26 gedreht/angetrieben wird und zusätzlich und/oder gleichzeitig außen am drehbaren Gehäuseelement 9 des Rotors 23 kann eine vorteilhafter zweite Bearbeitung des Werkstückes erfolgen, wie z.B. ein Polieren einer Oberfläche des Werkstückes oder dergleichen. Dies ist eine völlig neuartige Funktionalität einer Motorspindel 1.

Darüber hinaus weist der Motor 6 einen Sensor 36 zum Erfassen eines Bearbeitungsparameters und/oder eines Motorparameters auf. Beispielsweise kann ein (ordnungsgemäßes) Vorhandensein, Befestigtsein eines Werkzeuges bzw. Bearbeitungswerkzeuges 30 an der Motorspindel 1 bzw. im Spannsystem bzw. in der Werkzeugaufnahme 14 detektierbar sein. Die (elektrische) Energie-/Signalleitung des Sensors 36 kann vom Rotor 23 zum Stator 18 einerseits mittels eines Schleifkontaktes 39 und/oder andererseits kontaktlos (40) realisiert werden, in axialer oder radialer Richtung.

Grundsätzlich kann alternativ oder in Kombination an Stelle des Sensors 36 ein vorteilhafter Stecker (nicht näher dargestellt) vorgesehen werden, mit dem elektrische Energie und/oder Informationen/Signale zwischen der Motorspindel 1 bzw. dem drehbaren Gehäuseelement 9 des Rotors 23 und dem Bearbeitungswerkzeuges 30 ausgetauscht/übertragen werden kann.

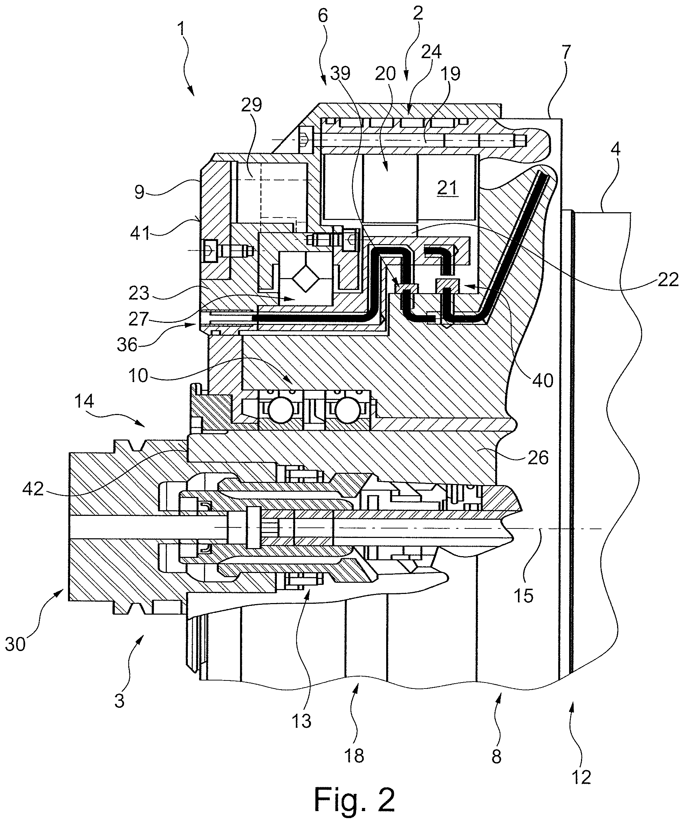

Ein wesentlicher Unterschied zwischen den beiden Varianten gemäß Figur 1, 2 und der Figur 3 ist, dass bei der ersten Variante (vgl. Figur 1, 2) die drehbaren Komponenten bzw. der Rotor 23 zwischen statischen bzw. nicht-drehbaren Komponenten des Stators 18 angeordnet sind, wobei das Lager 27 umfangseitig, außen statisch bzw. nicht-drehbar ist, d.h. der Außenring steht und der Innenring dreht sich. Bei einer Beeinträchtigung des Lagers 27 wird hier vorzugsweise der Stator 18 vom Flansch mittels der schrauben 19 demontiert und ausgetauscht.

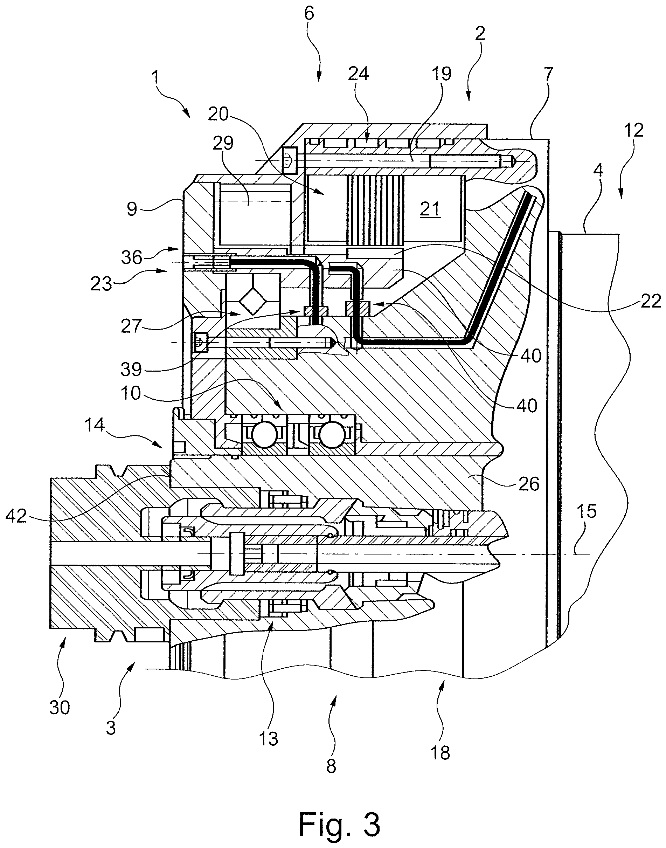

Bei der zweiten Variante gemäß Figur 3 sind die drehbaren Komponenten bzw. der Rotor 23 ebenfalls zwischen statischen bzw. nicht-drehbaren Komponenten des Stators 18 angeordnet, wobei das Lager 27 umfangseitig, außen drehbar ist, d.h. der Innenring steht und der Außenring dreht sich. Bei einer Beeinträchtigung des Lagers 27 wird hier vorzugsweise lediglich der Rotor 23 demontiert/abgeschraubt, insb. das Gehäuselement 9 und ein Rotorelement 40 einschl. Lager 27 und Sensor 36. Dies verursacht besonders wenig Aufwand und ist zudem besonders kostengünstig.

Generell kann mittels der Erfindung ein sog. stufenlos verstellbares Gegenlager (mittels des Gehäuselelementes 9) am sog. Spindelkopf bzw. der sog., Spindelnase realisiert werden, dass sich um die Drehachse 15 dreht und konzentrisch hierzu ausgebildet ist. Zudem kann ein vorteilhafter Stellantrieb mittels des Motors 6 realisiert werden, um zum Antrieben/Bewegen/Verstellen einer Zusatzachse des Werkzeugs 31 bzw. Bearbeitungswerkzeugs 30 verwendet zu werden.

Grundsätzlich ist bei der Erfindung von besonderem Vorteil, dass die Rotorbaugruppe bzw. der Rotor 23 und/oder der gesamte Motor 6 ohne großen Aufwand austauschbar und/oder nachrüstbar ist. Zudem kann der Sensor 36 ohne großen Aufwand ausgetauscht werden.

All dies eröffnet neuartige Funktionalitäten der Motorspindel 1, ist besonders platzsparend bzw. kleinräumig zu verwirklichen und ermöglicht eine besonders kostengünstige Betriebsweise.

## Patentansprüche

1. Motorspindel (1) mit einem ersten elektromagnetischen Antriebssystem (12), wobei eine Statoreinheit (2) und eine um eine Drehachse (15) drehbare, wenigstens eine Rotorwelle (26) und eine Werkzeugaufnahme (13, 14) zum Aufnehmen eines Bearbeitungswerkzeugs (30, 31) aufweisende Rotoreinheit (3) vorgesehen sind, wobei wenigstens eine Lagereinheit (10, 11) zum drehbaren Lagern der Rotoreinheit (3) in der Statoreinheit (2) vorgesehen ist, wobei die Werkzeugaufnahme (13, 14) in einem Endbereich der Rotoreinheit (3) angeordnet ist, wobei die Statoreinheit (2) wenigstens ein Statorgehäuse (8) mit einem zumindest im Endbereich der Rotoreinheit (3) angeordneten Endabschnitt aufweist, wobei die Statoreinheit (2) wenigstens einen ein zweites elektromagnetisches Antriebssystem (20) aufweisenden Motor (6) mit einem Stator (18) und einem drehbaren Rotor (23) umfasst, wobei der Rotor (23) wenigstens ein drehbares, durch den Stator (18) antreibbares Gehäuseelement (9) des Endabschnittes der Statoreinheit (2) aufweist, wobei das drehbare Gehäuseelement (9) wenigstens eine drehbare Stirnfläche (41) des Endabschnitts umfasst, **dadurch gekennzeichnet,**
- **dass** das drehbare Gehäuseelement (9) und/oder die drehbare Stirnfläche (41) des Endabschnitts als Werkzeughalter (13, 14) zum Halten des Bearbeitungswerkzeugs (30, 31) ausgebildet ist,
- und **dass** das Gehäuseelement (9) und/oder die drehbare Stirnfläche (41) eine Ausnehmung (33) und/oder Anschlagfläche für das Bearbeitungswerkzeug (30, 31) aufweist,
- und **dass** das Gehäuseelement (9) und/oder die drehbare Ausnehmung (33) und/oder Anschlagfläche für das Bearbeitungswerkzeug (30, 31) am in radialer Richtung ausgerichteten/exponierten Umfang bzw. Umfangsfläche des Endabschnittes angeordnet ist,
- und **dass** das drehbare Gehäuseelement (9) und/oder die drehbare Stirnfläche (41) des Endabschnitts in Richtung der Drehachse (15) wenigstens teilweise zwischen der Lagereinheit (10) und einer Endfläche (42) des Endbereichs der Rotoreinheit (3), insbesondere der Werkzeugaufnahme (13, 14), angeordnet ist,
- und **dass** das zweite elektromagnetische Antriebssystem (20) in Richtung der Drehachse (15) wenigstens teilweise zwischen der Stirnfläche (41) des Endabschnitts und einem Anschlussflansch (7) zum Fixieren der Statoreinheit (2) an einem Spindelkasten angeordnet ist,
- und **dass** das erste elektromagnetische Antriebssystem (12) wenigstens teilweise zwischen der Lagereinheit (10) und zumindest einer Lagervorrichtung (11) zum drehbaren Lagern der Rotoreinheit (3) in der Statoreinheit (2) angeordnet ist.

2. Motorspindel nach Anspruch 1, **dadurch gekennzeichnet, dass** wenigstens der Rotor (23) und/oder das drehbare Gehäuseelement (9) konzentrisch zur Drehachse (15) der Rotoreinheit (3) angeordnet ist.

3. Motorspindel nach einem der vorgenannten Ansprüche, **dadurch gekennzeichnet, dass** sie ein Bearbeitungswerkzeug (30, 31) umfasst, wobei das Bearbeitungswerkzeug (30, 31) wenigstens ein um eine Bearbeitungsachse (34) drehbares, von der Rotoreinheit (3) antreibbares Bearbeitungselement (31) umfasst, wobei die Bearbeitungsachse (34) in einem spitzen oder rechten Winkel zur Drehachse (15) der Rotoreinheit (3) angeordnet ist.

4. Motorspindel nach einem der vorgenannten Ansprüche, **dadurch gekennzeichnet, dass** wenigstens ein Positionssensor (29) zum Erfassen der Drehwinkelposition des Rotors (23) und/oder des Gehäuseelementes (9) vorgesehen ist.

5. Werkzeugmaschine mit einer Motorspindel nach einem der vorgenannten Ansprüche.

## Claims

1. Motor spindle (1) having a first electromagnetic drive system (12), wherein a stator unit (2) and a rotor unit (3), which is rotatable about an axis of rotation (15) and has at least one rotor shaft (26) and a tool receptacle (13, 14) for receiving a machining tool (30, 31), are provided, wherein at least one mounting unit (10, 11) is provided for rotatably mounting the rotor unit (3) in the stator unit (2), wherein the tool receptacle (13, 14) is arranged in an end region of the rotor unit (3), wherein the stator unit (2) has at least one stator housing (8) that comprises an end portion arranged at least in the end region of the rotor unit (3), wherein the stator unit (2) comprises at least one motor (6) having a second electromagnetic drive system (20) and having a stator (18) and a rotatable rotor (23), wherein the rotor (23) has at least one rotatable housing element (9) of the end portion of the stator unit (2), which housing element can be driven by the stator (18), wherein the rotatable housing element (9) comprises at least one rotatable end face (41) of the end portion, **characterized**
- **in that** the rotatable housing element (9) and/or the rotatable end face (41) of the end portion are/is in the form of a tool holder (13, 14) for holding the machining tool (30, 31),
- and **in that** the housing element (9) and/or the rotatable end face (41) have/has a recess (33) and/or abutment surface for the machining tool (30, 31),
- and **in that** the housing element (9) and/or the rotatable recess (33) and/or abutment surface for the machining tool (30, 31) are/is arranged on the circumference or circumferential surface of the end portion that is aligned/exposed in a radial direction,
- and **in that** the rotatable housing element (9) and/or the rotatable end face (41) of the end portion are/is at least partially arranged between the mounting unit (10) and an end face (42) of the end region of the rotor unit (3), in particular of the tool receptacle (13, 14), in the direction of the axis of rotation (15),
- and **in that** the second electromagnetic drive system (20) is at least partially arranged between the end face (41) of the end portion and a connection flange (7), intended for fixing the stator unit (2) to a headstock, in the direction of the axis of rotation (15),
- and **in that** the first electromagnetic drive system (12) is at least partially arranged between the mounting unit (10) and at least one mounting device (11) for rotatably mounting the rotor unit (3) in the stator unit (2).

2. Motor spindle according to Claim 1, **characterized in that** at least the rotor (23) and/or the rotatable housing element (9) are/is arranged concentrically with the axis of rotation (15) of the rotor unit (3).

3. Motor spindle according to either of the preceding claims, **characterized in that** it comprises a machining tool (30, 31), wherein the machining tool (30, 31) comprises at least one machining element (31) that is rotatable about a machining axis (34) and can be driven by the rotor unit (3), wherein the machining axis (34) is arranged at an acute angle or at right angles in relation to the axis of rotation (15) of the rotor unit (3) .

4. Motor spindle according to one of the preceding claims, **characterized in that** at least one position sensor (29) for detecting the rotational angle position of the rotor (23) and/or of the housing element (9) is provided.

5. Machine tool having a motor spindle according to one of the preceding claims.

## Revendications

1. Broche motorisée (1) avec un premier système d'entraînement électromagnétique (12), une unité de stator (2) et une unité de rotor (3) rotative autour d'un axe de rotation (15), présentant au moins un arbre de rotor (26) et un logement d'outil (13, 14) pour recevoir un outil d'usinage (30, 31), étant prévues, au moins une unité de palier (10, 11) étant prévue pour supporter de manière rotative l'unité de rotor (3) dans l'unité de stator (2), le logement d'outil (13, 14) étant agencé dans une zone d'extrémité de l'unité de rotor (3), l'unité de stator (2) présentant au moins un boîtier de stator (8) avec une section d'extrémité agencée au moins dans la zone d'extrémité de l'unité de rotor (3), l'unité de stator (2) présentant au moins un moteur (6) présentant un deuxième système d'entraînement électromagnétique (20) avec un stator (18) et un rotor rotatif (23), le rotor (23) présentant au moins un élément de boîtier rotatif (9) de la section d'extrémité de l'unité de stator (2) pouvant être entraîné par le stator (18), l'élément de boîtier rotatif (9) comprenant au moins une surface frontale rotative (41) de la section d'extrémité, **caractérisée**
- **en ce que** l'élément de boîtier rotatif (9) et/ou la surface frontale rotative (41) de la section d'extrémité est configuré sous forme de porte-outil (13, 14) pour maintenir l'outil d'usinage (30, 31),
- et **en ce que** l'élément de boîtier (9) et/ou la surface frontale rotative (41) présente un évidement (33) et/ou une surface de butée pour l'outil d'usinage (30, 31),
- et **en ce que** l'élément de boîtier (9) et/ou l'évidement rotatif (33) et/ou la surface de butée pour l'outil d'usinage (30, 31) est agencé sur la périphérie ou la surface périphérique de la section d'extrémité orientée/exposée dans la direction radiale,
- et **en ce que** l'élément de boîtier rotatif (9) et/ou la surface frontale rotative (41) de la section d'extrémité est agencé dans la direction de l'axe de rotation (15) au moins partiellement entre l'unité de palier (10) et une surface d'extrémité (42) de la zone d'extrémité de l'unité de rotor (3), notamment du logement d'outil (13, 14),
- et **en ce que** le deuxième système d'entraînement électromagnétique (20) est agencé dans la direction de l'axe de rotation (15) au moins partiellement entre la surface frontale (41) de la section d'extrémité et une bride de raccordement (7) pour fixer l'unité de stator (2) à une boîte à broches,
- et **en ce que** le premier système d'entraînement électromagnétique (12) est agencé au moins partiellement entre l'unité de palier (10) et au moins un dispositif de palier (11) pour supporter de manière rotative l'unité de rotor (3) dans l'unité de stator (2).

2. Broche motorisée selon la revendication 1, **caractérisée en ce qu'**au moins le rotor (23) et/ou l'élément de boîtier rotatif (9) est agencé de manière concentrique par rapport à l'axe de rotation (15) de l'unité de rotor (3).

3. Broche motorisée selon l'une quelconque des revendications précédentes, **caractérisée en ce qu'**elle comprend un outil d'usinage (30, 31), l'outil d'usinage (30, 31) comprenant au moins un élément d'usinage (31) rotatif autour d'un axe d'usinage (34), pouvant être entraîné par l'unité de rotor (3), l'axe d'usinage (34) étant agencé à un angle aigu ou droit par rapport à l'axe de rotation (15) de l'unité de rotor (3).

4. Broche motorisée selon l'une quelconque des revendications précédentes, **caractérisée en ce qu'**au moins un capteur de position (29) est prévu pour détecter la position angulaire de rotation du rotor (23) et/ou de l'élément de boîtier (9).

5. Machine-outil avec une broche motorisée selon l'une quelconque des revendications précédentes.
